# EUROPÄISCHE PATENTSCHRIFT

(11) **EP 1 818 221 B1**
(45) Veröffentlichungstag und Bekanntmachung des Hinweises auf die Patenterteilung: **18.06.2008**
(21) Anmeldenummer: 06002883.4
(22) Anmeldetag: 13.02.2006
(51) Int. Cl.: B60R 16/02

(54) **Leitungsstrang**
Cable section
Faisceau de conducteurs

(43) Veröffentlichungstag der Anmeldung: 15.08.2007
(73) Patentinhaber: Delphi Technologies, Inc., Troy, MI 48007 (US)
(72) Erfinder: Daub, Udo, 47259 Duisburg (DE); Büscher, Hans, 40476 Düsseldorf (DE)
(74) Vertreter: Manitz, Finsterwald & Partner GbR

(56) Entgegenhaltungen:
- EP-A- 1 241 056
- US-A- 5 824 960
- US-A1- 2002 014 348
- US-A1- 2003 121 692
- US-A1- 2005 092 512

## Beschreibung

Die vorliegende Erfindung betrifft einen Leitungsstrang, insbesondere zur Verwendung in Kraftfahrzeugen. Leitungsstränge, wie zum Beispiel Kabelbäume, umfassen eine oder mehrere Leitungen, die beispielsweise der Übertragung von Signalen oder der Stromversorgung dienen.

Bekannte Leitungsstränge sind zumeist sehr flexibel und biegsam ausgelegt. Dadurch ergibt sich der nachteilige Effekt, dass derartige Leitungsstränge in ihrem Verlauf unerwünschte Ausbuchtungen und Knicke aufweisen können, die zu Beschädigungen des Leitungsstrangs führen können.

Oftmals müssen Leitungsstränge auch beweglich angeordnet sein. Dies kann zum Beispiel der Fall sein, wenn ein Leitungsstrang mit einem beweglichen Bauteil, beispielsweise mit einer Tür, verbunden ist. In bestimmten Zuständen ist dann ein Abschnitt des Leitungsstrangs überschüssig und muss sicher verstaut werden.

Nachteilig ist dabei das oftmals erhebliche Stauvolumen eines zu verstauenden Leitungsstrangabschnitts. Häufig treten auch unerwünschte Geräusche auf, die durch den verstauten Leitungsstrangabschnitt verursacht werden (beispielsweise Klappern bei Vibrationen).

Meist muss der zu bewegende Teil eines Leitungsstrangs durch Öffnungen geführt werden. Dieses Hindurchführen des Leitungsstrangs durch Öffnungen, wie zum Beispiel beim Öffnen oder Schließen einer Tür, ist oft unbefriedigend gelöst.

Die US 2005/0092512 A1 betrifft eine Vorrichtung nach dem Oberbegriff des Anspruchs 1 und beschreibt ein Verfahren gemäß dem Oberbegriff des Anspruchs 11.

Der Erfindung liegt die Aufgabe zugrunde, einen Leitungsstrang zu schaf fen, der sich leicht verstauen lässt und einfach durch Öffnungen zu führen ist. Weiterhin soll ein Verfahren geschaffen werden, um einen derartigen Leitungsstrang auf einfache und sichere Weise zu verstauen.

Die Lösung dieser Aufgaben erfolgt durch die Merkmale der Ansprüche 1 und 11.

Der erfindungsgemäße Leitungsstrang, der zumindest eine elektrische Leitung umfasst, zeichnet sich dadurch aus, dass dieser zumindest abschnittweise mit einer Streckvorrichtung entlang seiner Längserstreckung versehen ist. Diese Streckvorrichtung übt auf den Abschnitt des Leitungsstranges, der die Streckvorrichtung umfasst, eine Kraft aus, um den Leitungsstrang im Wesentlichen krümmungsfrei auszurichten. Der erfindungsgemäße Leitungsstrang neigt also durch die Wirkung der Streckvorrichtung dazu, sich geradlinig auszurichten.

Die stabilisierende Wirkung der Streckvorrichtung ermöglicht ein einfaches "Durchfädeln" des Leitungsstrangs durch Öffnungen schon bei der Montage des erfindungsgemäßen Leitungsstrangs. Flexible Leitungsstränge können lediglich durch Öffnungen hindurch gezogen werden, während der erfindungsgemäße Leitungsstrang auch durch Öffnungen hindurch geschoben werden kann. Auch in Fällen, bei denen der Leitungsstrang beweglich angeordnet sein muss, ist eine derartige Versteifung von Vorteil, da die Bewegung des Leitungsstrangs sowohl durch eine Zugkraft als auch durch eine Schubkraft bewirkt werden kann.

Weiterhin weist der erfindungsgemäße Leitungsstrang in seinem Verlauf keine unerwünschten Ausbuchtungen, Knicke und/oder Abwinklungen auf, da diese durch die Streckwirkung der Streckvorrichtung verhindert werden.

Die Flexibilität des erfindungsgemäßen Leitungsstrangs kann an die zu erwartenden Krümmungsradien oder Kräfte angepasst sein. Je nach Einsatzgebiet des Leitungsstrangs kann eine stärker wirkende bzw. schwächer wirkende Streckvorrichtung vorgesehen sein. Die Streckvorrichtung kann auch nur abschnittsweise entlang der Längserstreckung des Leitungsstrangs vorgesehen sein.

Die Streckvorrichtung des erfindungsgemäßen Leitungsstrangs ist derart angeordnet, dass sie den Leitungsstrang nicht in Umfangsrichtung umgibt. Sie ist also weder schlauchförmig, noch umgibt sie den Leitungsstrang wendel- oder schraubenlinienförmig.

Vorteilhafte Ausführungsformen der Erfindung sind in den Unteransprüchen, der Beschreibung und den Zeichnungen angegeben.

In einer Ausführungsform ist der Leitungsstrang Teil eines Kabelbaums, der von zumindest einem Hüllelement gebündelt wird. Derartige Hüllelemente können zum Beispiel Kabelbinder, Schellen oder Schläuche sein. Die Hüllelemente sichern den Zusammenhalt der einzelnen Leitungen des Kabelbaums und können zum Beispiel auch dem Schutz des Kabelbaums vor Abrieb, Feuchtigkeit und Temperatur dienen. Sie können auch zur Bündelung der Streckvorrichtung mit den Leitungen des Leitungsstrangs vorgesehen sein.

Gemäß einer Ausführungsform der Erfindung umfasst die Streekvorrichtung zumindest eine Stahlfeder oder ein Stahlband (Lehrenband). Es kann sich beispielsweise dabei um eine Feder handeln, die parallel zu der Längserstreckung des Leitungsstrangs verläuft. Eine Auslenkung des Leitungsstrangs aus einer geradlinigen Ausrichtung heraus beansprucht die Feder quer zu ihrer Längsachse. Die rückstellende Kraft bewirkt, dass der Leitungsstrang wieder im Wesentlichen geradlinig ausgerichtet und gestreckt wird. Eine derartige Streckvorrichtung ist einfach und wirkungsvoll und überdies auch kostengünstig zu realisieren.

Gemäß einer weiteren vorteilhaften Ausführungsform ist der erfindungsgemäße Leitungsstrang zumindest teilweise in einem Leitungsstaubeutel angeordnet. Dieser umfasst im Wesentlichen eine Tasche mit einer ersten und einer zweiten Öffnung. Diese Tasche schützt einen temporär überschüssigen Leitungsstrangabschnitt und dämpft zudem Geräusche, die beispielsweise bei Erschütterungen durch den Leitungsstrang entstehen.

Es kann vorgesehen sein, dass der im Inneren des Leitungsstaubeutels angeordnete Abschnitt des Leitungsstrangs im Wesentlichen in einer Ebene verläuft. Weiterhin kann vorgesehen sein, dass dieser Abschnitt im Inneren des Leitungsstaubeutels eine Schlaufe ausbildet. Die Bildung der Schlaufe kann durch die Wirkung der Streckvorrichtung hervorgerufen werden. Eine Anordnung in einer Ebene und/oder in einer Schlaufe ist sehr Platz sparend und verhindert u.a. eine unbeabsichtigte Knotenbildung des Leitungsstrangs.

Die Tasche des Leitungsstaubeutels kann aus flexiblem Material gefertigt sein. Es kann vorgesehen sein, dass das Material aus einer oder mehreren Lagen von Gewebe- und/oder Folienmaterial gefertigt ist. Eine derartige Ausbildung des Taschenmaterials ist kostengünstig, Gewicht sparend, robust und dämpft auf einfache und effiziente Weise Geräusche, die durch den Leitungsstrang entstehen können. Das Material kann den Anforderungen entsprechend derart gewählt werden, dass der Leitungsstaubeutel zusätzliche Schutzfunktionen ausübt (elektrische und thermische Isolation, Brand hemmende Wirkung, Schutz vor Feuchtigkeit und dergleichen).

Gemäß einer weiteren vorteilhaften Ausführungsform ist der Leitungsstrang bezüglich einer Bewegung durch eine der Öffnungen des Leitungsstaubeutels fixiert. Dies ermöglichte es, bestimmte Abschnitte des Leitungsstrangs von einer Belastung mit einer Zugkraft auszunehmen, z.B. den Abschnitt zwischen dem Leitungsstaubeutel und dem Fahrzeuginneren.

Ein derartiger Leitungsstaubeutel kann im Dach eines Fahrzeugs montiert werden. Durch eine flache Ausgestaltung der Geometrie des Leitungsstaubeutels kann damit Bauraum im Dach eines Fahrzeugs genutzt werden. Der von herkömmlichen Kabelbäumen belegte Bauraum steht dann einer anderweitigen Nutzung zur Verfügung.

Es kann auch ein Einbauteil mit Aufnahmeraum vorgesehen sein, das anstatt oder zusätzlich zu einem Leitungsstaubeutel zur Aufnahme eines Leitungsstrangs bereitgestellt wird. Dieses Einbauteil kann beispielsweise eine geschäumte Form sein, die in ihrem Inneren den zu verstauenden Leitungsstrangabschnitt aufnimmt. Die Einbauteile können auf einfache Weise z.B. in die Türverkleidungen eines Fahrzeuges und/oder den Fahrzeughimmel integriert werden.

Die Erfindung wird im Folgenden rein beispielhaft anhand vorteilhafter Ausführungsformen und unter Bezugnahme auf die Zeichnungen beschrieben. Es zeigen:
- Fig. 1a: einen schematischen Querschnitt einer Ausführungsform eines Leitungsstrangs,
- Fig. 1b: einen schematischen Querschnitt einer weiteren Ausführungsform eines Leitungsstrangs,
- Fig. 2a: eine schematische Darstellung eines Fahrzeugs mit Leitungsstaubeuteln,
- Fig. 2b: eine schematische Darstellung der Anordnung eines Leitungsstaubeutels im Dach eines Fahrzeugs, und
- Fig. 3: eine schematische Darstellung eines Leitungsstaubeutels.

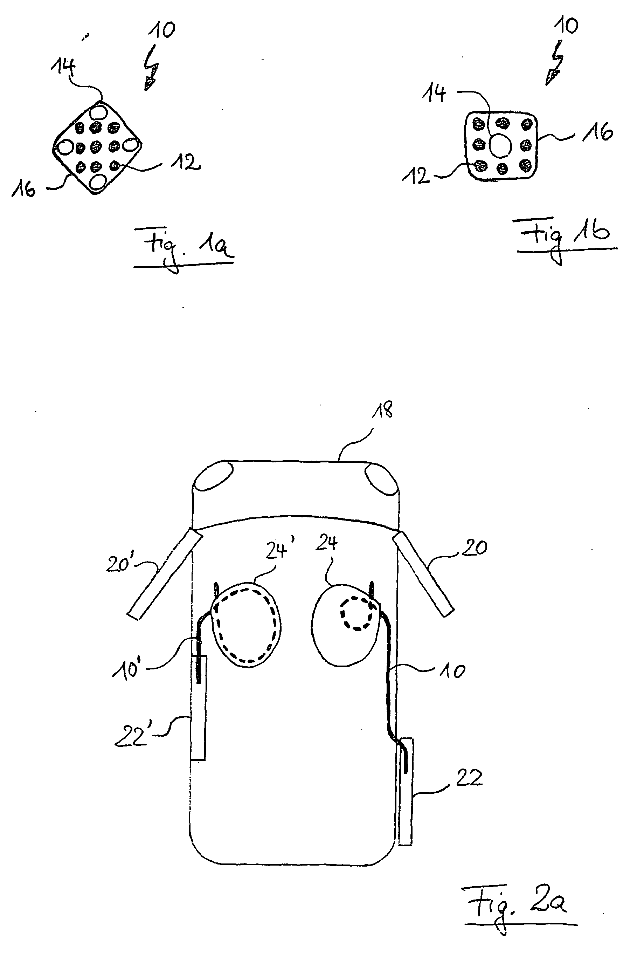

Fig. 1a zeigt schematisch den Querschnitt eines erfindungsgemäßen Leitungsstrangs 10. Dieser umfasst eine Vielzahl von Leitungen 12. Die Leitungen 10 können auf unterschiedliche Art angeordnet sein und müssen nicht derart regelmäßig angeordnet sein wie in Fig. 1a dargestellt. Die Leitungen 10 müssen nicht ausschließlich elektrische Leitungen sein, sondern können auch beispielsweise Flüssigkeits- und/oder Gasleitungen, optische Leitungen oder Leitungen oder Kabel anderer Art sein. An den Leitungen 12 sind mehrere Streckelemente 14 angeordnet. Sie dienen der Stabilisierung des Leitungsstrangs 10 und sorgen dafür, dass der Leitungsstrang ohne Einwirkung äußerer Kräfte einen krümmungsfreien oder zumindest krümmungsarmen Verlauf annimmt. Die Eigenschaften der Streckvorrichtung können an die Einsatzbedingungen und Anforderungen an die Flexibilität des Leitungsstrangs 10 angepasst werden, beispielsweise durch eine geeignete Anzahl der Streckelemente 14 und / oder die Wahl geeigneter elastischen Eigenschaften der Streckelemente 14. Die Streckelemente 14 können Federn, beispielsweise Blattfedern, Stahldrahtfedern oder aus verschiedenen anderen Materialien (z.B. Kunststoff oder Metall) sein. Auch einfache elastische Stäbe, die entlang des Leitungsstrangs 10 angeordnet sind, entfalten die Wirkung einer Streckvorrichtung.

Der Leitungsstrang 10 ist mit einer Schutzhülle 16 umgeben. Eine derartige Schutzhülle kann vorgesehen sein, wenn der Leitungsstrang 10 gegen äußere Einflüsse geschützt werden soll. Die Schutzhülle 16 kann neben ihrer schützenden Funktion auch zum Zusammenhalt/Bündelung des Leitungsstrangs 10 beitragen. Der Leitungsstrang 10 kann auch durch andere Mittel zusammengehalten werden, wie zum Beispiel Kabelbinder oder Schellen.

Fig. 1b zeigt eine weitere Ausführungsform des Leitungsstrangs 10. In dieser Ausführungsform ist das Streckelement 14 im Innern des Leitungsstrangs 10 angeordnet. Die Leitungen 12 des Leitungsstrangs 10 sind wiederum von der Schutzhülle 16 umgeben. Auch diese Ausführungsform zeichnet sich durch ihren einfachen und kostengünstig herzustellenden Aufbau aus. Es sind ebenso Mischformen der beiden vorstehend beschriebenen Ausführungsformen vorstellbar. Insbesondere kann der Leitungsstrang 10 mit den Leitungen verwoben sein.

Ein Beispiel zur Verwendung und Wirkung eines erfindungsgemäßen Leitungsstrangs 10 ist in Fig. 2a dargestellt. Sie zeigt ein Fahrzeug 18, welches mit zwei Vordertüren 20, 20' und zwei Schiebetüren 22, 22' ausgestattet ist. Verschiedene elektrische Verbraucher (nicht gezeigt) in den Schiebetüren 22, 22' sind mit Steuereinheiten (nicht gezeigt) und einer Batterie (nicht gezeigt) des Fahrzeugs 18 über Leitungsstränge 10, 10' (Kabelbäume) verbunden. Der Verlauf der Leitungsstränge 10, 10' ist lediglich schematisch dargestellt.

Die Schiebetür 22' der linken Fahrzeugseite ist geschlossen. Der Leitungsstrang 10' führt von der Schiebetür 22' in einen Leitungsstaubeutel 24'. Der Verlauf des Leitungsstrangs 10' ist im Inneren des Leitungsstaubeutels 24' gestrichelt dargestellt. Im Inneren des Leitungsstaubeutels 24' verläuft der Leitungsstrang 10' in einer Schlaufe und verlässt den Leitungsstaubeutel 24' zur Fahrzeugvorderseite hin. Der weitere Verlauf des Leitungsstrangs 10' ist nicht gezeigt.

Durch die Streckvorrichtung des Leitungsstrangs 10', deren Wirkung den Krümmungsradius des Leitungsstrangs 10' stets zu vergrößern sucht, drückt der Leitungsstrang 10' gegen die Innenwände des Leitungsbeutels 24'. Ein Knoten im Verlauf des Leitungsstrangs 10' durch einen unkontrollierten Verstauvorgang kann so nicht auftreten.

Die Situation bei geöffneter Schiebetür 22 ist auf der rechten Fahrzeugseite dargestellt. Während des Öffnens der Schiebetür 22 wird der Leitungsstrang 10 aus dem Leitungsstaubeutel 24 gezogen. Der noch in dem Leitungsstaubeutel 24 befindliche Abschnitt des Leitungsstrangs 10 bildet immer noch eine Schlaufe. Durch die Streckvorrichtung des Leitungsstrangs 10 wird auf den Verlauf des Leitungsstrangs 10 zwischen dem Leitungsstaubeutel 24 und der Schiebetür 22 eine in das Innere des Leitungsstaubeutels 24 gerichtete Zugkraft ausgeübt. Durch diese Zugkraft wird der Leitungsstrang 10 beim Schließen der Schiebetür 22 automatisch in den Leitungsstaubeutel 24 zurückgezogen. Außerdem sorgt die Zugkraft für eine ordnungsgemäße Ausrichtung und einen möglichst geradlinigen Verlauf des Leitungsstrangs 10. Dadurch wird auch verhindert, dass der Leitungsstrang 10 beim Schließen der Schiebetür 22, 22' eingeklemmt wird. Die Streckwirkung der Streckvorrichtung des Leitungsstrangs 10 erleichtert auch das "Durchfädeln" des Leitungsstrangs 10 durch die diversen Öffnungen der Fahrzeugkarosserie.

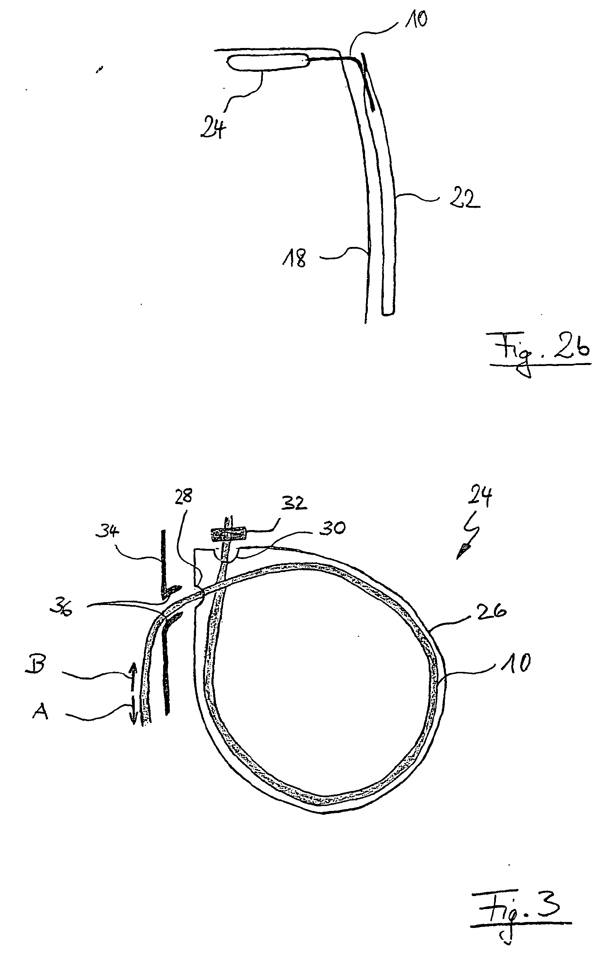

Fig. 2b verdeutlicht die Anordnung des Leitungsstaubeutels 24 im Dach des Fahrzeugs 18. Es kann aber auch vorgesehen sein, den Leitungsstaubeutel 24 im Boden, in den Türen, oder an anderen Orten des Fahrzeugs anzubringen.

Fig. 3 zeigt schematisch den Aufbau einer Ausführungsform des Leitungsstaubeutels 24. Der Leitungsstaubeutel 24 umfasst eine Tasche 26. Diese umfasst eine türseitige Öffnung 28 und eine fahrzeugseitige Öffnung 30. Durch eine Fixierung 32 wird der Leitungsstrang 10 daran gehindert, sich durch die fahrzeugseitige Öffnung 30 zu bewegen. Dies stellt sicher, dass der Leitungsstrang 10 nicht unbeabsichtigt im Fahrzeuginneren des Fahrzeugs 18 mit einer Zugkraft belastet wird. Im Inneren der Tasche 26 ist der Leitungsstrang 10 im Wesentlichen frei beweglich. Durch die Streckwirkung der Streckvorrichtung wird der Leitungsstrang 10 allerdings automatisch an die Innenseite der Tasche 26 gedrückt. Bei einem Öffnen der Schiebetür 22, 22' wird der Leitungsstrang 10 in Bewegungsrichtung A aus dem Leitungsstaubeutel 24 gezogen. Dazu muss eine Kraft aufgewendet werden, da die Streckvorrichtung den Leitungsstrang 10 krümmungsfrei auszurichten sucht. Diese Streckwirkung verursacht also eine Zugkraft, die in den Leitungsstaubeutel 24 hineingerichtet ist. Diese Zugkraft muss beim Öffnen der Tür überwunden werden. Tritt der Leitungsstrang 10 in seinem Verlauf durch eine Öffnung, beispielsweise in der Karosserie 34, so sind an der Öffnung Führungselemente 36 vorgesehen, um den Durchtritt des Leitungsstrangs 10 zu erleichtern.

Wird die Schiebetür 22 geschlossen, so wird durch die vorstehend beschriebene Zugkraft der Leitungsstrang 10 in den Leitungsstaubeutel 24 zurückgezogen (Bewegungsrichtung B). Die versteifende Wirkung der Streckvorrichtung erleichtert zudem den Durchtritt des Leitungsstrangs 10 durch Öffnungen (beispielsweise in der Karosserie).

Die Streckvorrichtung des Leitungsstrangs 10 sorgt somit stets für einen angemessenen Zug zum Verstauen des Leitungsstrangs 10. Außerhalb des Leitungsstaubeutels 24 wirkt die Streckvorrichtung zudem vorteilhaft auf den Verlauf des Leistungsstrangs 10. Durch eine krümmungsfrei ausrichtende Wirkung entstehen im Verlauf des Leitungsstrangs keine unbeabsichtigten Schlaufen oder Knicke, die unter anderem zu Beschädigungen des Leitungsstrangs 10 führen könnten. Der Verlauf des Leitungsstrangs 10 ist somit kontrollierter als bei einem herkömmlichen Leitungsstrang.

### Bezugszeichenliste

- 10, 10': Leitungsstrang
- 12: Leitung
- 14: Streckelement
- 16: Schutzhülle
- 18: Fahrzeug
- 20, 20': Vordertür
- 22, 22': Schiebetür
- 24, 24': Leitungsstaubeutel
- 26: Tasche
- 28: türseitige Öffnung
- 30: fahrzeugseitige Öffnung
- 32: Fixierung
- 34: Karosserie
- 36: Führungselemente

- A, B: Bewegungsrichtung

## Patentansprüche

1. Leitungsstrang (10, 10'), insbesondere zur Verwendung in Kraftfahrzeugen, der zumindest eine elektrische Leitung (12) umfasst, und der zumindest abschnittweise mit einer Streckvorrichtung (14) entlang seiner Längserstreckung versehen ist, wobei die Streckvorrichtung (14) auf den die Streckvorrichtung (14) umfassenden Abschnitt des Leitungsstrangs (10, 10') eine den Leitungsstrang (10, 10') im Wesentlichen krümmungsfrei ausrichtende Kraft ausübt,
**dadurch gekennzeichnet,**
**dass** die Streckvorrichtung (14) nicht den Leitungsstrang (10, 10') in Umfangsrichtung umgebend angeordnet ist.

2. Leitungsstrang (10, 10') nach einem der vorstehenden Ansprüche,
**dadurch gekennzeichnet,**
**dass** der Leitungsstrang (10, 10') Teil eines Kabelbaums ist, der von zumindest einem Hüllelement (16) gebündelt wird.

3. Leitungsstrang (10, 10') nach einem der vorstehenden Ansprüche,
**dadurch gekennzeichnet**,
das die Streckvorrichtung (14) zumindest eine Stahlfeder umfasst.

4. Leitungsstrang (10, 10') nach einem der vorstehenden Ansprüche,
**dadurch gekennzeichnet,**
**dass** der Leitungsstrang (10, 10') zumindest teilweise in einem Leitungsstaubeutel (24, 24') angeordnet ist, der eine Tasche (26) mit einer ersten (28, 30) und einer zweiten Öffnung (28, 30) umfasst.

5. Leitungsstrang (10, 10') nach Anspruch 4,
**dadurch gekennzeichnet,**
**dass** der Abschnitt des Leitungsstrangs (10, 10'), der im Inneren des Leitungsstaubeutels (24, 24') angeordnet ist, im Wesentlichen in einer Ebene verläuft.

6. Leitungsstrang (10, 10') nach Anspruch 4 oder 5,
**dadurch gekennzeichnet,**
**dass** der Verlauf des Abschnitts des Leitungsstrangs (10, 10'), der im Inneren des Leitungsstaubeutels (24, 24') angeordnet ist, eine Schlaufe ausbildet.

7. Leitungsstrang (10, 10') nach einem der Ansprüche 4 bis 6,
**dadurch gekennzeichnet,**
**dass** die Tasche (26) aus flexiblem Material gefertigt ist.

8. Leitungsstrang (10, 10') nach Anspruch 7,
**dadurch gekennzeichnet,**
**dass** die Tasche (26) aus einer oder mehreren Lagen von Gewebe- und/oder Folienmaterial gefertigt ist.

9. Leitungsstrang (10, 10') nach einem der Ansprüche 4 bis 8,
**dadurch gekennzeichnet,**
**dass** der Leitungsstrang (10, 10') bezüglich einer Bewegung durch eine der Öffnungen (28, 30) fixiert ist.

10. Leitungsstrang (10, 10') nach einem der Ansprüche 4 bis 9,
**dadurch gekennzeichnet,**
**dass** der Leitungsstaubeutel (24, 24') im Dach eines Fahrzeugs (18) montiert ist.

11. Verfahren zum Verstauen eines Leitungsstrangs (10, 10') nach zumindest einem der vorstehenden Ansprüche, der zumindest eine elektrische Leitung (12) umfasst, und der zumindest abschnittweise mit einer Streckvorrichtung (14) entlang seiner Längserstreckung versehen ist, wobei die Streckvorrichtung (14) auf den die Streckvorrichtung (14) umfassenden Abschnitt des Leitungsstrangs (10, 10') eine den Leitungsstrang (10, 10') im Wesentlichen krümmungsfrei ausrichtende Kraft ausübt, insbesondere bei Kraftfahrzeugen,
**dadurch gekennzeichnet,**
**dass** zumindest ein Abschnitt eines Leitungsstrangs (10, 10') in einem Leitungsstaubeutel (24, 24') verstaut wird, der eine Tasche (26) mit einer ersten (28, 30) und einer zweiten Öffnung (28, 30) umfasst.

## Claims

1. A cable run (10, 10'), in particular for use in motor vehicles, which comprises at least one electrical cable (12) and which is provided at least sectionally with a stretching device (14) along its longitudinal extent, wherein the stretching device (14) exerts a force aligning the cable run (10, 10') substantially free of curvature on the portion of the cable run (10, 10') comprising the stretching device (14), **characterized in that** the stretching device (14) is arranged not surrounding the cable run (10, 10') in the peripheral direction.

2. A cable run (10, 10') in accordance with any one of the preceding claims, **characterized in that** the cable run (10, 10') is part of a cable harness which is bundled by at least one enveloping element (16).

3. A cable run (10, 10') in accordance with any one of the preceding claims, **characterized in that** the stretching device (14) comprises at least one steel spring.

4. A cable run (10, 10') in accordance with any one of the preceding claims, **characterized in that** the cable run (10, 10') is arranged at least partly in a cable stowage bag (24, 24') which comprises a pouch (26) having a first aperture (28, 30) and a second aperture (28, 30).

5. A cable run (10, 10') in accordance with claim 4, **characterized in that** the portion of the cable run (10, 10') which is arranged in the interior of the cable stowage bag (24, 24') extends substantially in one plane.

6. A cable run (10, 10') in accordance with claim 4 or claim 5, **characterized in that** the extent of the portion of the cable run (10, 10') which is arranged in the interior of the cable stowage bag (24, 24') forms a loop.

7. A cable run (10, 10') in accordance with any one of the claims 4 to 6, **characterized in that** the pouch (26) is produced from flexible material.

8. A cable run (10, 10') in accordance with claim 7, **characterized in that** the pouch (26) is produced from one or more layers of fabric material and/or foil material.

9. A cable run (10, 10') in accordance with any one of the claims 4 to 8, **characterized in that** the cable run (10, 10') is fixed with respect to a movement through one of the apertures (28, 30).

10. A cable run (10, 10') in accordance with any one of the claims 4 to 9, **characterized in that** the cable stowage bag (24, 24') is installed in the roof of a vehicle (18).

11. A method of stowing a cable run (10, 10) in accordance with at least one of the preceding claims, which comprises at least one electrical cable (12) and which is provided at least sectionally with a stretching device (14) along its longitudinal extent, wherein the stretching device (14) exerts a force aligning the cable run (10, 10') substantially free of curvature on the portion of the cable run (10, 10') comprising the stretching device (14), in particular in motor vehicles,
**characterized in that**
at least one portion of a cable run (10, 10') is stowed in a cable stowage bag (24, 24') which comprises a pouch (26) having a first aperture (28, 30) and a second aperture (28, 30).

## Revendications

1. Cordon conducteur (10, 10'), à utiliser en particulier dans des véhicules automobiles, qui comprend au moins une ligne électrique (12) et qui est pourvu, au moins par endroits, d'un dispositif tendeur (14) le long de son étendue longitudinale, le dispositif tendeur (14) exerçant, sur le segment du cordon conducteur (10, 10') comprenant le dispositif tendeur (14), une force orientant le cordon conducteur (10, 10') sensiblement sans courbure,
**caractérisé en ce que** le dispositif tendeur (14) est disposé de manière à ne pas entourer le cordon conducteur (10, 10') dans la direction périphérique.

2. Cordon conducteur (10, 10') selon la revendication précédente,
**caractérisé**
**en ce que** le cordon conducteur (10, 10') fait partie d'un faisceau de câbles qui est resserré par au moins un élément de gainage (16).

3. Cordon conducteur (10, 10') selon l'une quelconque des revendications précédentes,
**caractérisé**
**en ce que** le dispositif tendeur (14) comprend au moins un ressort d'acier.

4. Cordon conducteur (10, 10') selon l'une quelconque des revendications précédentes,
**caractérisé**
**en ce que** le cordon conducteur (10, 10') est disposé au moins en partie dans un sac de rangement de cordon (24, 24') qui comprend une poche (26) avec une première ouverture (28, 30) et une seconde ouverture (28, 30).

5. Cordon conducteur (10, 10') selon la revendication 4,
**caractérisé**
**en ce que** le segment du cordon conducteur (10, 10'), qui est disposé à l'intérieur du sac de rangement de cordon (24, 24'), s'étend sensiblement dans un plan.

6. Cordon conducteur (10, 10') selon la revendication 4 ou 5,
**caractérisé**
**en ce que** l'allure du segment du cordon conducteur (10, 10'), qui est disposé à l'intérieur du sac de rangement de cordon (24, 24'), forme une boucle.

7. Cordon conducteur (10, 10') selon l'une quelconque des revendications 4 à 6,
**caractérisé**
**en ce que** la poche (26) est fabriquée dans un matériau flexible.

8. Cordon conducteur (10, 10') selon la revendication 7,
**caractérisé**
**en ce que** la poche (26) est fabriquée dans une ou plusieurs couches d'un tissu et/ou d'un matériau en feuille.

9. Cordon conducteur (10, 10') selon l'une quelconque des revendications 4 à 8,
**caractérisé**
**en ce que** le cordon conducteur (10, 10') est fixé contre un déplacement à travers l'une des ouvertures (28, 30).

10. Cordon conducteur (10, 10') selon l'une quelconque des revendications 4 à 9,
**caractérisé**
**en ce que** le sac de rangement de cordon (24, 24') est monté dans le toit d'un véhicule (18).

11. Procédé pour ranger un cordon conducteur (10, 10') selon l'une au moins des revendications précédentes, qui comprend au moins une ligne électrique (12) et qui est pourvu, au moins par endroits, d'un dispositif tendeur (14) le long de son étendue longitudinale, le dispositif tendeur (14) exerçant, sur le segment du cordon conducteur (10, 10') comprenant le dispositif tendeur (14), une force orientant le cordon conducteur (10, 10') sensiblement sans courbure, en particulier dans des véhicules automobiles
**caractérisé**
**en ce qu'**au moins un segment d'un cordon conducteur (10, 10') est rangé dans un sac de rangement de cordon (24, 24') qui comprend une poche (26) avec une première ouverture (28, 30) et une seconde ouverture (28, 30).
